Europäisches Patentamt

European Patent Office

Office européen des brevets

(19)

(11) Veröffentlichungsnummer : **0 101 634**
**B1**

(12) # EUROPÄISCHE PATENTSCHRIFT

(45) Veröffentlichungstag der Patentschrift :
21.12.88

(21) Anmeldenummer : 83201141.5

(22) Anmeldetag : 02.08.83

(51) Int. Cl.⁴ : **H 04 Q   7/00**

(54) Verfahren zur Zugriffssteuerung bei einem Nachrichtensystem.

(30) Priorität : 20.08.82 DE 3230999

(43) Veröffentlichungstag der Anmeldung :
29.02.84 Patentblatt 84/09

(45) Bekanntmachung des Hinweises auf die Patenterteilung : 21.12.88 Patentblatt 88/51

(84) Benannte Vertragsstaaten :
CH DE FR GB IT LI SE

(56) Entgegenhaltungen :
DE—A— 3 133 347
US—A— 2 658 189
FREQUENZ, Band 36, Nr. 4/5, April-Mai 1982, Seiten 105-109, Berlin, DE; U. LANGEWELLPOTT: "Mehrwegeresistente Datenübertragung mit hohen Raten im Mobilfunk bei 1 GHz"

(73) Patentinhaber : **Philips Kommunikations Industrie AG**
**Thurn-und-Taxis-Strasse 10**
**D-8500 Nürnberg 10 (DE)**
**DE**
**N.V. Philips' Gloeilampenfabrieken**
**Groenewoudseweg 1**
**NL-5621 BA Eindhoven (NL)**
**CH FR GB IT LI SE**

(72) Erfinder : **Kittel, Ludwig, Dr.-Ing.**
**Eichenstrasse 37**
**D-8501 Heroldsberg (DE)**

(74) Vertreter : **Peuckert, Hermann, Dipl.-Ing. et al**
**Philips Patentverwaltung GmbH Wendenstrasse 35**
**Postfach 10 51 49**
**D-2000 Hamburg 1 (DE)**

EP 0 101 634 B1

## Beschreibung

Die Erfindung betrifft ein Verfahren zur Zugriffssteuerung bei einem Nachrichtensystem mit einer Vielzahl voneinander unabhängiger Teilnehmerstationen, bei dem jede Teilnehmerstation zum Verbindungsaufbau nach einem Vielfachzugriff-Verfahren auf einem allen Teilnehmerstationen gemeinsamen Duplex-Übertragungskanal zugreift und bei dem jede Teilnehmerstation zur Einleitung einer von ihr ausgehenden Übertragung einen Zeitschlitz des Duplex-Übertragungskanals mit einem Signalisierungs-Zeichen belegt und daraufhin von einer zentralen Einrichtung des Nachrichtensystems zur vollständigen Identifizierung aufgefordert wird.

Ein solches Zugriff-Verfahren in einem Funkübertragungs-System ist vorgeschlagen worden (EP-A-0 073 014, veröffeutlicht am 2.3.83). Der Duplex-Übertragungskanal des FunkübertragungsSystems ist in Hin- und Rückrichtung in Zeitschlitze aufgeteilt. Jeder für freie Zugriffe erlaubte Zeitschlitz wird in eine Anzahl von kurzen, sogenannten Rufschlitzen unterteilt (z. B. in eine Anzahl von acht Rufschlitzen). Der freie Zugriff einer Teilnehmerstation auf den Duplex-Übertragungskanal erfolgt nicht mit einer vollständigen Identifizierung sondern mit einem zeitlich wesentlich kürzeren Signal, einem sogenannten Signalisierungs-Kurzzeichen, das in einem der Rufschlitze gesendet wird. Die zentrale Einrichtung fordert nach Empfang eines SignalisierungsKurzzeichens die betreffende Teilnehmerstation zur vollständigen Identifizierung auf. Die Nummer des Rufschlitzes, in welchem das Signalisierungs-Kurzzeichen gesendet wurde, dient als Kennzeichen in der zentralen Einrichtung zur Unterscheidung zwischen jenen Teilnehmerstationen, die während eines bestimmten Zeitraums mit dem Signalisierungs-Kurzzeichen tatsächlich zugegriffen haben. Die Teilnehmerstationen können zum Senden des allen gemeinsamen Signalisierungs-Kurzzeichens einen der kurzen Rufschlitze aus einer Anzahl zur Verfügung stehender Rufschlitze auswählen. Die Zeitdauer eines Rufschlitzes entspricht mindestens der für alle Teilnehmerstationen gleichen Zeitdauer des Signalisierungs-Kurzzeichens. Die Auswahl bzw. der genaue Zeitpunkt zum Senden des Signalsierungs-Kurzzeichens in einem der Rufschlitze kann zufällig erfolgen.

Wenn die zentrale Einrichtung das SignalisierungsKurzzeichen mit hinreichender Empfangsqualität in einem der Rufschlitze erkannt hat, sendet sie der Teilnehmerstation, die durch die Nummer des Rufschlitzes vorläufig markiert ist, eine Aufforderung zur vollständigen Identifizierung. Die Aufforderung zur vollständigen Identifizierung in einem zugeordneten Zeitschlitz entspricht für alle anderen Teilnehmerstationen einer Zugriffssperre.

Wie sich den vorstehenden Ausführungen zum vorgeschlagenen Funkübertragungs-System (EP-A-0 073 014) entnehmen läßt, erfolgt das Senden des allen Teilnehmerstationen gemeinsamen Signalisierungs-Kurzzeichens in zeitlich getrennten, kurzen Rufschlitzen, wobei die Nummer des gewählten Rufschlitzes die sendende Teilnehmerstation von anderen Teilnehmerstationen unterscheidet. Melden sich zwei Teilnehmerstationen im gleichen Rufschlitz, so können diese von der zentralen Einrichtung nicht unterschieden werden.

Aus der Zeitschrift « Frequenz », Band 36, Nr. 4/5, 1982, Seiten 105-109 ist die Anwendung von orthogonalen Codes bei der Übertragung von Information nach dem Zeitvielfach-Zugriffsverfahren bekannt. Ein Hinweis darauf, wie bei einem solchen Übertragungsverfahren der gleichzeitige Zugriff von unabhängigen Teilnehmerstationen auf einen gemeinsamen Duplex-Übertragungskanal vermieden werden kann, ist diesem Zeitschriftenaufsatz nicht entnehmbar. Auch der im Zeitschriftenaufsatz beschriebene Anwendungsfall der Kombination von Zeitmultiplex- und Codemultiplexverfahren zur Nachrichtenübertragung bei einem Autotelefonsystem ist das Auftreten von Zugriffzerstörungen nicht angesprochen.

Der Erfindung liegt die Aufgabe zugrunde, bei einem Nachrichtensystem der eingangs genannten Art den gesamten beim Verbindungsaufbau zur Belegung zur Verfügung stehenden Zeitschlitz zum gleichzeitigen Senden von Unterscheidungsmerkmalen auszunutzen, die beim Empfang wieder voneinander getrennt werden können.

Diese Aufgabe wird erfindungsgemäß dadurch gelöst, daß als Unterscheidungsmerkmal zur Kennzeichnung der sich meldenden Teilnehmerstation eine ImpulsFunktion aus einem System von orthogonalen oder annähernd orthogonalen Impuls-Funktionen verwendet wird, welche durch Vereinbarung sowohl der zentralen Einrichtung als auch den Teilnehmerstationen bekannt sind und daß Teilnehmerstationen für Zugriffe erlaubte Zeitschlitze zeitlich unkoordiniert mit einer der orthogonalen Impuls-Funktionen belegen.

Die Realisierung von orthogonalen ImpulsFunktionen ist mit Mitteln der analogen und digitalen Schaltungstechnik mit geringem Aufwand möglich. Die zur Erkennung von orthogonalen Impuls-Funktionen verwendeten Signalanalysatoren sind einfach aufgebaut. Das Senden der orthogonalen Impuls-Funktionen erfolgt während des gesamten erlaubten Zeitschlitzes und ist nicht mehr auf den Sonderfall des Sendens eines festen Zeichens in einem der verschiedenen Rufschlitze beschränkt (EP-A-0 073 014). Zugriffszerstörungen durch Senden der vollständigen, aber bei gleichzeitigen Senden nicht mehr trennbaren Identifizierungen können vermieden werden.

In einer vorteilhaften Ausgestaltung der Erfindung werden als System orthogonaler ImpulsFunktionen sogenannte orthogonale SIN-COS-Funktionen oder WALSH-Funktionen oder HAAR-Funktionen oder SLANT-Funktionen verwendet.

Solche orthogonalen Impuls-Funktionen und deren Auswertung sind bekannt (NTG, Signalverarbeitung, Vorträge der gleichnamigen Fachtagung in Erlangen vom 04. - 06. April 1973, herausgegeben von W. Schüßler, Vortrag Signaltheorie von Hans Dieter Lüke). Durch die erfindungsgemäße Verwendung solcher orthogonalen Impuls-Funktionen als Signalisierungs-Zeichen werden gleichzeitige Zugriffe ohne gegenseitige Zugriffszerstörungen ermöglicht. Die orthogonalen Impuls-Funktionen werden in den Teilnehmerstationen zufällig ausgewählt, um die Wahrscheinlichkeit der gegenseitigen Zerstörung infolge gleicher, gesendeter, orthogonaler Impuls-Funktionen zu verringern.

Weitere vorteilhafte Weiterbildungen der Erfindung sind in den Unteransprüchen gekennzeichnet.

Die Erfindung wird im folgenden bei Anwendung in einem Funkfernsprechdienst näher beschrieben und erläutert.

Bei einem Funkfernsprechdienst sind ortsfeste Funkstationen (die zentralen Einrichtungen) räumlich nach einem Zellsystem geordnet. Jeder der ortsfesten Funkstationen ist eine Anzahl von Duplex-Übertragungskanälen, sogenannten Funkkanälen, zugeordnet. Zur Steuerung der Systemfunktionen (Signalisierung) wird mindestens ein Kanal, der sogenannte Dienstkanal, verwendet. Zur Signalisierung gehört z. B. die Übertragung von Wahlinformationen beim Aufbau von Gesprächen von und zu mobilen Teilnehmerstationen des Funkfernsprechdienstes. Jeder Dienstkanal ist in jeder Übertragungsrichtung, d. h. in Hin- und Rückrichtung, in eine Folge von gleichlangen Zeitschlitzen unterteilt. Der Gesprächsaufbau wird über den Dienstkanal vorgenommen. Die ortsfeste Funkstation sendet in Rückrichtung kontinuierlich Meldungen mit fester Zeitdauer aus. In jeder Meldung ist eine Markierung enthalten, die über den Verwendungszweck eines zugeordneten Zeitschlitzes der Hinrichtung Auskunft gibt. Die Markierung kann eine Erlaubnis für freie Zugriffe oder eine Sperre für freie Zugriffe von mobilen Teilnehmerstationen mittels Signalisierungs-Zeichen im zugeordneten Zeitschlitz bedeuten. Weiterhin kann die Markierung auch die Bedeutung einer Aufforderung zur vollständigen Identifizierung im zugeordneten Zeitschlitz für jene mobile Teilnehmerstation haben, die mit einem Signalisierungs-Zeichen zugegriffen hat.

Will eine mobile Teilnehmerstation auf den Dienstkanal zugreifen, so wartet diese zunächst auf eine Freigabe-Erlaubnis zum freien Zugriff auf einen Zeitschlitz in Hinrichtung. Die mobile Teilnehmerstation wählt eine der orthogonalen Impuls-Funktionen zufällig aus, legt in einem Speicher die « Nummer » der orthogonalen Impuls-Funktion ab und sendet die ausgewählteorthogonale Impuls-Funktion im frei gegebenen Zeitschlitz. Die durch die Impuls-Funktion gekennzeichnete Teilnehmerstation ist damit der ortsfesten Funkstation in soweit bekannt, daß diese von anderen sich meldenden Teilnehmerstationen durch die « Nummer » der verwendeten orthogonalen Impuls-Funktion unterschieden werden kann. Die ortsfeste Funkstation sendet eine Markierung, welche die « Nummer » der ausgewählten Impuls-Funktion enthält, als Aufforderung zur vollständigen Identifizierung und reserviert einen dieser Markierung fest zugeordneten Zeitschlitz für die aufgeforderte, mobile Teilnehmerstation. Die mobile Teilnehmerstation erkennt die Aufforderung zur vollständigen Identifizierung nach Vergleich der Markierung mit der gespeicherten « Nummer ». Im zugeordneten Zeitschlitz sendet die mobile Teilnehmerstation ihre vollständige Identifizierung sowie die Art des von ihr gewünschten Dialogs zur ortsfesten Funkstation.

Die Auswertungvon orthogonalen Impuls-Funktionen in der ortsfesten Funkstation sowie die Erzeugung der orthogonalen oder annähernd orthogonalen ImpulsFunktionen in der mobilen Teilnehmerstation erfolgt entsprechend der mathematischen Theorie. Die fortlaufende Analyse der im NachrichtenübertragungsSystem benutzen orthogonalen Impuls-Funktionen erfolgt während einer Folge von Zeitintervallen. Die zeitliche Beschränkung bei der Analyse ergibt sich aus den Eigenschaften der im Nachrichtenübertragungs-System verwendeten orthogonalen Impuls-Funktionen.

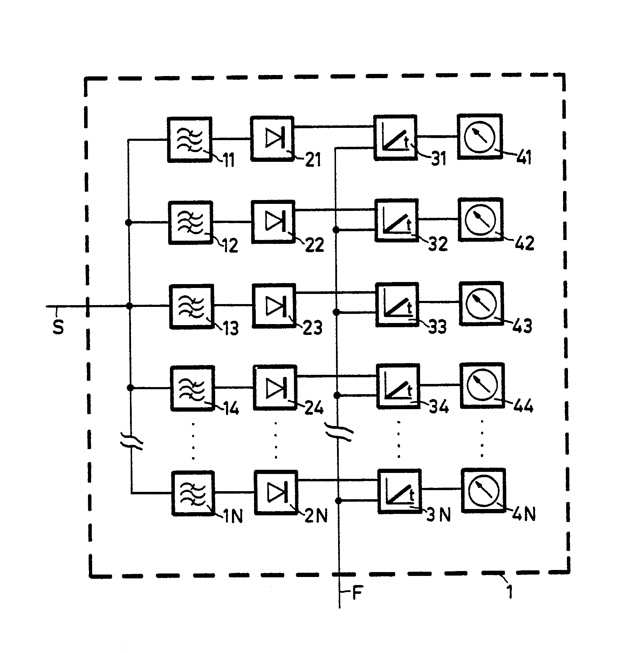

Die Analyse der orthogonalen Impuls-Funktion in der ortsfesten Funkstation soll im Prinzip bei der Verwendung von SIN-COS-Funktionen erläutert werden. In der Zeichnung ist schematisch ein das zugrunde liegende Prinzip auf einfache Weise verdeutlichendes Ausführungsbeispiel für eine Auswerteschaltung von orthogonalen Impuls-Funktionen dargestellt.

Zur vorläufigen Identifizierung der sich meldenden Teilnehmerstation stehen als Merkmale N unterschiedliche Frequenzen $f_1, ..., f_N$ zur Verfügung. Die Feststellung, welche der Frequenzen $f_1, ..., f_N$ während eines für freie Zugriffe erlaubten Zeitschlitzes ausgesendet werden, kann beispielsweise mittels der in der Zeichnung dargestellten Auswerteschaltung 1 erfolgen, der ein auszuwertendes Eingangssignal S zugeführt wird. Komponenten der Auswerteschaltung 1 sind eine Filterbank aus N auf die Frequenzen $f_1, ..., f_N$ abgestimmten Filtern 11, ..., 1N, den Filtern 11, ..., 1N nachgeordneten Gleichrichtern 21, ..., 2N, den Gleichrichtern 21, ..., 2N nachgeordneten Integratoren 31, ..., 3N und nachgeordnet Anzeigeeinrichtungen 41, ..., 4N. Die Integratoren 31, ..., 3N summieren während der Dauer eines Zeitschlitzes, in dem Frequenzen $f_1, ..., f_N$ von Teilnehmerstationen ausgesendet werden, das gleichgerichtete Signal der auf die Frequenzen $f_1, ..., f_N$ abgestimmten Filter 11, ..., 1N auf. Überschreitet das aufsummierte, gleichgerichtete Signal eine einstellbare Anzeigeschwelle, so wird in der ortsfesten Funkstation auf das Senden der zugehörigen Frequenzen entschieden. Durch genügend hohe Wahl der Anzeigeschwelle wird gleichzeitig gewährleistet, daß Rauschstörungen nicht als Zugriffssignal interpretiert werden und daß sich mit nur geringem Sendepegel meldende Teilnehmerstationen von einer Zuteilung von Zeitschlitzen zum Aufbau einer Verbindung ausgeschlossen werden. Die Freigabe der Integratoren 31, ...., 3N für die Dauer eines Zeitschlitzes wird von einem Freigabesignal F gesteuert. Dieses wird von einer in der Zeichnung nicht dargestellten zentralen Steuereinrichtung der ortsfesten Funkstation erzeugt.

Greifen mehrere Teilnehmerstationen mit Impuls-Funktionen gleichzeitig auf den freigegebenen Zeitschlitz zu, so kann von der zentralen Einrichtung nur diejenige Teilnehmerstation, deren Impuls-Funktion mit der größten Empfangsfeldstärke empfangen wurde, zur vollständigen Identifizierung aufgefordert werden. Weiterhin kann das zeitliche Auftreten der Impuls-Funktionen der zentralen Einrichtung zur Signal-Laufzeitmessung zwischen sich bewegender Teilnehmerstation und ortsfesten Funkstationen herangezogen werden. Für Teilnehmerstationen, welche sich im Augenblick des Zugreifens auf den freigegebenen Zeitschlitz an einer funkgeographisch besonders günstigen Geländestelle, z. B. auf einer Bergkuppe, befinden ist zu erwarten, daß infolge der Weiterbewegung Richtung bergab, in der empfangenden ortsfesten Funkstation ein rascher Abfall der Empfangsfeldstärke auftritt. Durch Kombination bei der Auswertung der Feldstärke- und der Laufzeitmessung besteht die Möglichkeit die Zuteilung von freien Zeitschlitzen zum Verbindungsaufbau auch von der geographischen Lage der Teilnehmerstationen abhängig zu machen. Einer Teilnehmerstation, welche sich näher zur empfangenden ortsfesten Funkstation befindet, kann auch bei geringerer Empfangsfeldstärke der freigegebene Zeitschlitz zugeteilt werden.

## Patentansprüche

1. Verfahren zur Zugriffssteuerung bei einem Nachrichtensystem mit einer Vielzahl voneinander unabhängiger Teilnehmerstationen, bei dem jede Teilnehmerstation zum Verbindungsaufbau nach einem Vielfachzugriffs-Verfahren auf einem allen Teilnehmerstationen gemeinsamen Duplex-Übertragungskanal zugreift, bei dem jede Teilnehmerstation zur Einleitung einer von ihr ausgehenden Übertragung einen Zeitschlitz des Duplex-Übertragungskanals mit einem Signalisierungs-Zeichen belegt und daraufhin von einer zentralen Einrichtung des Nachrichtensystems zur vollständigen Identifizierung aufgefordert wird, bei dem als Unterscheidungsmerkmal zur Kennzeichnung der sich meldenden Teilnehmerstation eine Impuls-Funktion aus einem System von orthogonalen oder annähernd orthogonalen Impuls-Funktionen verwendet wird, welche durch Vereinbarung sowohl der zentralen Einrichtung als auch den Teilnehmerstationen bekannt sind und bei dem Teilnehmerstationen für Zugriffe erlaubte Zeitschlitze zeitlich unkoordiniert mit einer der orthogonalen Impuls-Funktionen belegen.

2. Verfahren nach Anspruch 1, dadurch gekennzeichnet, daß als System orthogonaler Impuls-Funktionen orthogonale SIN-COS-Funktionen oder WALSH-Funktionen oder HAAR-Funktionen oder SLANT-Funktionen verwendet werden.

3. Verfahren nach Anspruch 1, dadurch gekennzeichnet, daß beim gleichzeitigen Zugreifen von Teilnehmerstationen auf einen für Zugriffe erlaubte Zeitschlitz mittels orthogonaler Impuls-Funktionen, nur diejenige mit der höchsten Empfangsfeldstärke zur vollständigen Identifizierung aufgefordert wird.

4. Verfahren nach Anspruch 1 und 3, dadurch gekennzeichnet, daß das zeitliche Auftreten der empfangenen Impuls-Funktionen in der zentralen Einrichtung zur Laufzeitbestimmung zwischen sich bewegenden Teilnehmerstationen und ortsfesten Funkstationen herangezogen wird.

## Claims

1. A method of access control in a communication system comprising a plurality of mutually independent subscriber stations, in which each subscriber station seizes a common duplex transmission channel for establishing a connection in accordance with a multipleaccess method, in which each subscriber station, to initiate a transmission from that station, inserts a signalling signal into a time slot of the duplex transmission channel and, in response thereto, is requested by a central unit of the communication system to fully identify itself, characterized in that, by way of identification character for identifying the reporting subscriber station, a pulse function from a system of orthogonal or substantially orthogonal pulse functions is used which, by mutual agreement, are known to both the central unit and the subscriber stations, and in that subscriber stations seize, uncoordinated in time, the time slots authorized for access by means of one of the orthogonal pulse functions.

2. A method as claimed in claim 1, characterized in that orthogonal SIN-COS-functions or WALSH-functions or HAAR-functions or SLANT-functions are used as the system of orthogonal pulse functions.

3. A method as claimed in Claim 1, characterized in that in the event subscriber stations simultaneously seize a time slot authorized for access by means of orthogonal pulse functions, only the station having the highest receiving field strength is requested to fully identify itself.

4. A method as claimed in claim 1 and 3, characterized in that the temporary occurrence of received pulse functions in the central unit are used to determine the time delay between moving subscriber stations and stanionary radio stations.

## Revendications

1. Procédé pour la commande de l'accès dans un système de communication comportant un grand nombre de postes d'abonnés indépendants les uns des autres, dans lequel chaque poste d'abonné, en vue d'établir une liaison, accède selon un procédé d'accès multiple à un canal de transmission duplex commun à tous les postes d'abonnés, dans lequel chaque poste d'abonné, pour introduire une transmission dont il est l'origine, occupe une tranche de temps du canal de transmission duplex au moyen d'un symbole de signalisation et est ensuite invité par une unité centrale du système de communication à fournir son identité complète, dans lequel à titre de particularité distinctive destinée à caractériser le poste d'abonné qui s'annonce, on utilise une fonction impulsionnelle appartenant à un système de fonctions impulsionnelles orthogonales ou approximativement orthogonales, qui, par convention, sont connues à la fois de l'unité centrale et des postes d'abonnés et dans lequel des postes d'abonnés occupent, sans coordination dans le temps, des tranches de temps permises pour des accès par une des fonctions impulsionnelles orthogonales.

2. Procédé suivant la revendication 1, caractérisé en ce qu'on utilise en tant que système de fonctions impulsionnelles orthogonales, des fonctions dites SIN-COS ou des fonctions WALSH ou des fonctions HAAR ou encore des fonctions SLANT orthogonales.

3. Procédé suivant la revendication 1, caractérisé en ce que dans le cas où plusieurs postes d'abonnés accèdent simultanément par des fonctions impulsionnelles orthogonales à une tranche de temps permise pour des accès, seule celle qui présente la plus forte intensité de champ reçue est invitée à fournir une identification complète.

4. Procédé suivant les revendications 1 et 3, caractérisé en ce que l'apparition dans le temps des fonctions impulsionnelles reçues dans l'unité centrale est utilisée pour la détermination du temps de parcours entre des postes d'abonnés mobiles et des stations radio fixes.